# EUROPEAN PATENT APPLICATION

(11) **EP 1 304 695 A2**
(43) Date of publication of application: **23.04.2003**
(21) Application number: 02257198.8
(22) Date of filing: 17.10.2002
(51) Int. Cl.: G11B 20/10

(54) **Multi-format media decoder and method of using same as an interface with a digital network**

(30) Priority: 18.10.2001 US 982617
(71) Applicant: Yazaki North America, Inc., Canton, Michigan 48187 (US)
(72) Inventor: Boyd, Michael R., Saline, MI 48176 (US); Paul, David J., Canton, MI 48188 (US); Sinotte, Sean C., Canton, MI 48187 (US)
(74) Representative: Cheyne, John Robert Alexander M.

(57) **Abstract**

A multi-format decoder board (102) interfaces with a digital data network (123), preferably a fibre optic digital data network. Because data can be transmitted over the data network (123) in a wide variety of formats, the decoder board (102) of the present invention is able to decode data streams of audiovisual programming in a variety of formats so that the data can then be output by the board (102) to various output devices including speakers, headphones (122), video monitors (98) and other display devices (99). The data network (123) is preferably on-board a vehicle in which the use of multiple playback devices (90,...,97) for various audiovisual data formats would be limited by space and power constraints.

## Description

### FIELD OF THE INVENTION

The present invention relates to the use of audio and audiovisual data signals, particularly in a vehicle. More particularly, the present invention relates to decoding audio and audiovisual digital data streams from a digital network, particularly a fiber optic network, for use by a variety of output devices, such as speakers, headphones, video monitors and other display devices.

### BACKGROUND OF THE INVENTION

With the growth of the Internet, cable television, video-on-demand services, satellite radio and the like, the demand for entertainment and informational media is constantly increasing. Consumers want a wide variety of audio and audiovisual programming to select from and want the programming they desire to be available whenever and wherever convenient.

As used herein and in the appended claims, the term audiovisual programming is used to broadly encompass audio programming, such as music or voice recordings or transmissions; video programming, such as still photographs or images; and audiovisual programming, moving pictures with an associated soundtrack, such as movies, television shows, etc.

To respond to these demands, many formats for storing and transmitting audio and audiovisual programming have been developed. For example, a DVD (Digital Versatile or Video Disk), a compact-sized disk, can contain an entire movie and often much additional information and programming. Text and audiovisual information equivalent to a small library can be stored on a CD ROM (Compact Disk--Read Only Memory). Hundreds of different channels can be carried in the composite signal of a cable television system. High quality sound recordings can be stored as MP3 files on a computer hard-drive or in the electronic memory of a portable MP3 player that can be taken anywhere.

Along with the demand that audio and audiovisual programming be widely and readily available, consumers also demand that such programming be of as high a quality as possible. In the digital realm, this translates into the need to store or transmit ever increasing quantities of data to provide the additional programming quality desired. Consequently, most, if not all, of the popular means of storing or transmitting audiovisual programming use some form of data compression to maximize the data either stored in the available memory space or sent via the available bandwidth.

There are various methods and standards of encoding and, in some cases, compressing digital data for storage or transmission. In addition to the DVD format mentioned above, these include, but are not limited to, the audio CD format and MP3 format for audio data; and the MPEG-1 (Motion Pictures Expert Group), MPEG-2, MPEG-4, Motion JPEG, and Video CD (VCD) formats for audiovisual data. Obviously, when the data is to be used, it must be decoded before it can be used by an output device, such as a television or display device.

With all these various formats for transmitting and storing audiovisual programming, it becomes very difficult to provide a system that can make use of multiple formats for audiovisual programming. Typically, this is not a problem as the user simply purchases a separate dedicated device to handle each format of audiovisual media or transmission desired.

However, the problems with multiple formatted audiovisual media resurface where space and power considerations make it inconvenient or impossible to provide all the different types of "players" a user may desire. These problems are further exacerbated if the data of the audiovisual programming in various formats needs to travel over a common data network.

Thus, there is a need in the art for a device and method that can address the problems that arise when a user wishes to make use of multiple formats of audiovisual programming in circumstances where the data must travel over a common network or when space, power or other considerations limit the use of a wide variety of playback devices.

### SUMMARY OF THE INVENTION

The present invention may be embodied and described as a multi-format decoder board for decoding audiovisual data streams in a number of different encoding formats for use by one or more audiovisual output devices. The decoder board preferably includes: an interface stage for interfacing with a digital data network; a multi-format decoder for decoding at least two different encoding formats for an audiovisual data stream; a microcontroller for controlling the interface stage and the decoder; an interface for a user input device; and connections for connecting the decoder board to one or more audiovisual output devices. The decoder may also output a decoded audio signal to the interface stage for transmission over the digital network.

Preferably, the interface stage is an optical interface stage for interfacing the decoder board with a fiber optic network. The connections for one or more audiovisual output devices preferably include a headphone jack for connecting a pair of headphones and a connection for a display device, such as a television, video monitor, or LCD.

The decoder board may further include an interface to switches or preferably a touch-screen which provides user input to the microcontroller. The microcontroller will process the user input and control either local handling of the audiovisual data or the source of audiovisual data. Local control may include the display of menus using video overlays, display format, display brightness, audio volume, etc. Source control may include navigation functions through the audiovisual stream such as play, pause, stop, rewind, fast forward, chapter select, etc. Source control will typically involve sending signals over the network.

The decoder can preferably handle any variety of encoding formats for digital audiovisual data. For example, the decoder may decode both MPEG-1 and MPEG-2 data streams. The decoder may also decode a data stream output by any of the following: an audio CD player, a DVD player or a VCD player. The device may also decode a data stream in a format such as MPEG-4 or output from a wireless receiver. The decoder may also be a compliant device and decode copy protected digital audiovisual data. Finally, the decoder may also decode an MP3 data stream.

A preferred application for the decoder board of the present invention is as a multi-media system installed in a vehicle, such as a car, bus, etc. Consequently, the present invention may also be embodied as a multi-media system in a vehicle that includes: a digital data network installed in a vehicle; at least one storage, playback or receiver device on-board the vehicle for providing an encoded audiovisual data stream to the network; at least one audiovisual output device connected to the network; and a multi-format decoder board for decoding audiovisual data streams in a plurality of encoding formats, the decoder board decoding the audiovisual data stream for use by the at least one audiovisual output device. As before, the decoder board preferably includes an interface stage for interfacing with a digital data network; a multi-format decoder for decoding at least two different encoding formats for an audiovisual data stream; a microcontroller for controlling the interface stage and the decoder; an interface for a user input device; and connections for connecting the decoder board to one or more audiovisual output devices.

The present invention also encompasses the methods of making and using the decoder board and system described above. For example, the present invention also encompasses a method of handling a digital data stream carrying data encoded in a number of different encoding formats by processing the digital data stream through a decoder board that includes a multi-format decoder for decoding at least two different encoding formats for audiovisual data and output a resulting decoded audiovisual signal to one or more audiovisual output devices.

### BRIEF DESCRIPTION OF THE DRAWINGS

The accompanying drawings illustrate preferred embodiments of the present invention and are a part of the specification. Together with the following description, the drawings demonstrate and explain the principles of the present invention.

Fig. 1 is an illustration of an in-vehicle data network used to service a variety of audiovisual output devices according to the present invention.

Fig. 2 is an illustration of a preferred embodiment of a media network including a multi-format decoder board according to the principles of the present invention.

Fig. 3 is an illustration of a first preferred embodiment of a multi-format decoder board according to the principles of the present invention.

Fig. 4 is an illustration of a second preferred embodiment of a multi-format decoder board according to the principles of the present invention.

Fig. 5 is a more detailed illustration of a preferred embodiment of a multi-format decoder board according to the principles of the present invention.

Throughout the drawings, identical elements are designated by identical reference numbers.

### DETAILED DESCRIPTION OF THE PREFERRED EMBODIMENTS

The present invention provides, among other things, a multi-format decoder board. The board interfaces with a digital data network, preferably a fiber optic digital data network. Because data can be transmitted over the data network in a wide variety of formats, the decoder board of the present invention is able to decode data streams of audiovisual programming in a variety of formats so that the data can then be output by the board to various output devices including speakers, headphones, video monitors and other display devices. The formats supported preferably include audio compact disc (CD), digital video (or versatile) disc (DVD), video compact disc (VCD), read-only memory compact disc (CD ROM), MP3 audio (an audio layer of the MPEG standard), Motion Pictures Expert Group Standard 1 (MPEG-1), MPEG-2, MPEG-4, and Motion JPEG. The decoder may also be a compliant device and decode copy protected digital audiovisual data.

Using the drawings, the preferred embodiments of the present invention will now be explained.

Vehicles represent a particular environment in which audiovisual programming, for entertainment or information, is frequently desired. However, by their nature, vehicles are places in which it would be difficult, because of space and power constraints, to provide each passenger with a variety of playback devices each dedicated to reproducing audiovisual programming from a particular data format or medium.

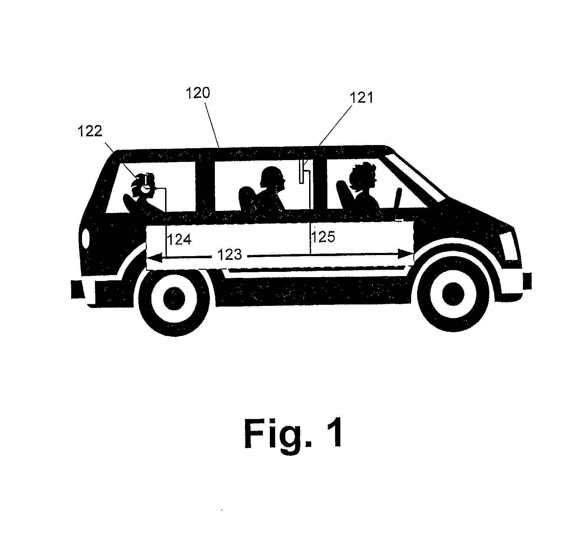

Consequently, as shown in Fig. 1, the present invention contemplates a vehicle (120) that includes an on-board digital data network (123). As will be understood, the term "vehicle" as used herein, and in the appended claims, encompasses all forms of motorized transportation, including, but not limited to, cars, vans, trucks, buses, sport-utility vehicles, airplanes, boats and the like.

Preferably, the on-board digital data network (123) is a fiber optic network. Generally, fiber optic networks are robust and capable of carrying large amounts of digital data.

With the provision of the data network (123) in the vehicle, audiovisual programming data can be communicated by the network (123) to various parts of the vehicle (120) for use by vehicle passengers. For example, one passenger may be watching a television, video monitor or display device (121) that is connected (125) to the data network (123) and receives an appropriate video or audiovisual signal therefrom. Additionally, another passenger may be listening to an audio program through a set of headphones (122) that are connected (124) to the network (123) and receive an audio signal therefrom.

The network (123) can carry digital data in any format. Consequently, the network (123) may be carrying, for example, an MPEG-1 audiovisual data stream and/or an MPEG-2 audiovisual data stream, and/or a DVD audiovisual data stream. For the video monitor or display device (121) to display all the possible programming, the network (123) must include, under the principles of the present invention, a multi-forrnat decoder board that can accept all the various types of data stream (DVD, MPEG-1 or MPEG-2) or others, decode the data stream and output a corresponding video signal in a form that can be used by and displayed on the display device (121) connected to the network (123).

Similarly, the network (123) may be carrying a data stream read from an audio CD and/or an MP3 audio data stream. For the headphones (122) or other speakers in the vehicle (120) to reproduce sound from these audio data streams, the network (123) must include a decoder board that can decode these various types of audio data streams and output a corresponding audio signal in a form that can be rendered as audible sound by the headphones (122) or other speakers connected to the network (123).

As used herein and in the appended claims, the term "audiovisual output device" or "output devices" refers to any device that renders an audiovisual signal or data stream perceptible, visually or aurally, to a human user. Consequently, output devices include, but are not limited to, speakers, headphones, earpieces, display devices, LCDs, video monitors, televisions, cathode ray tubes, etc.

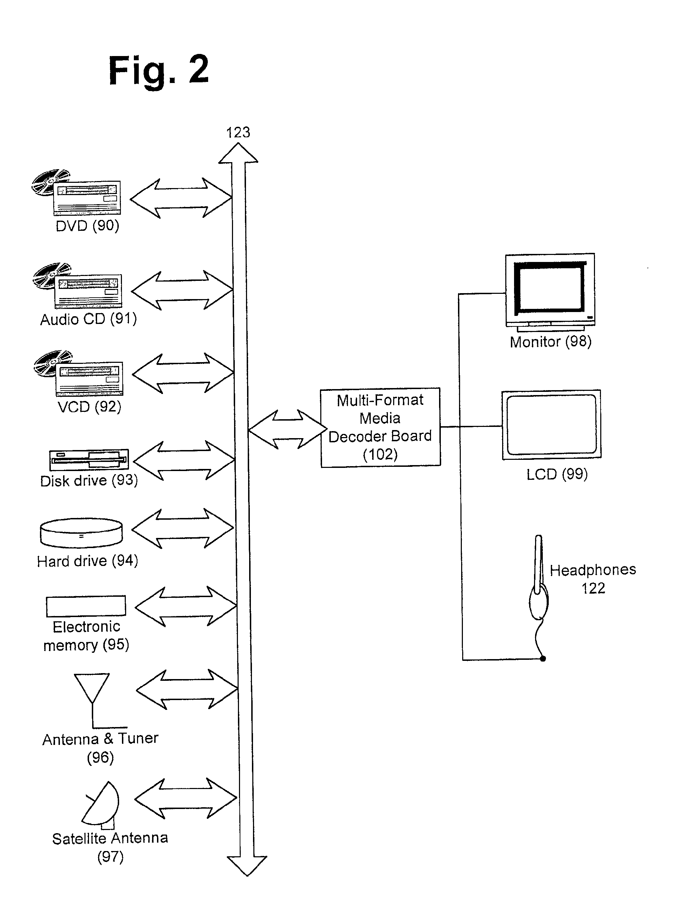

Fig. 2 illustrates an exemplary multi-media network according to the present invention. As indicated above, the preferred embodiment for the network in Fig. 2 would be as an on-board, in-vehicle network.

As shown in Fig. 2, the digital data network (123) of the present invention may receive audiovisual data streams from a wide variety of different storage, playback and receiver devices (90-97). As noted above, these various audiovisual data streams may be in a variety of different formats.

Fig. 2 also illustrates an embodiment of the multi-format decoder board (102) of the present invention serving as an interface between the digital data network (123) and various output devices, e.g., display devices, speakers, headphones, etc. Because the network (123) receives data from a variety of data storage and playback devices (90-97), the decoder board (102) decodes data from the network (123) for use by the output devices.

More specifically, Fig. 2 illustrates an example of an embodiment of the present invention in which an on-board, in-vehicle fiber optic network (123) receives data from a wide variety of storage, playback and receiver devices (90-97). It will be understood that the network shown in Fig. 2 is merely an exemplary embodiment. Actual embodiments of the present invention may include some, all or additional storage, playback and receiver devices as sources of digital audiovisual data to the network (123).

As shown in Fig. 2, the network (123) may be connected to a DVD player (90), an audio CD player (or CD changer) (91), a video compact disc (VCD) player (92), a floppy disk drive (93), a hard drive (94), a semiconductor or electronic memory unit (95), an analog antenna and tuner (96) and a satellite antenna (97). Any device that outputs an audiovisual signal or data stream may be connected to the network (123) within the scope of the present invention. Analog signal sources, such as the antenna and tuner (96) will have to output a signal to an analog-to-digital converter (not shown) to provide a digital data stream to the digital network (123), preferably a fiber optic network.

Because of the wide variety of playback, storage and receiver devices (90-97) that are feeding data to the network (123), the data streams on the network (123) will encompass a variety of formats. For example, the audio CD player (91) will output an audio data stream according to the audio CD encoding format. Likewise, the DVD player (90) will output an audiovisual signal according to the DVD encoding format. The antennae (96 & 97) may receive audiovisual programming encoded according to one of the MPEG formats. The electronic memory (95) may store audio files encoded according to the MP3 format. The hard drive (94) may store audiovisual files encoded according to one of the MPEG formats.

This variety of encoded audiovisual data will be unusable, in encoded form, by the output devices (98, 99, 122). The typical output devices that may receive and output the audiovisual data include a television or video monitor (98), a liquid crystal display (99) and headphones (122) or speakers. Moreover, different output devices require different input signals to function properly. For example, a standard television requires an audiovisual signal formatted to the NTSC or PAL standards. A video monitor may require an RGB signal or an S-video signal. A liquid crystal display (99) typically uses an analog video signal, but can also be configured to use a digital video signal.

In order to successfully interface the variety of encoding formats of audiovisual data streams on the network (123) with the possible output devices (e.g., 98, 99, 122), the multi-format media decoder board (102) of the present invention is required. The multi-format decoder board (102) of the present invention is capable of decoding the multitude of encoded audiovisual data streams on the network (123) and output the decoded data in a signal form that can be used by the possible output devices (e.g., 98, 99, 122) a user may wish to connected to the network (123). No such interface has been available in the prior art.

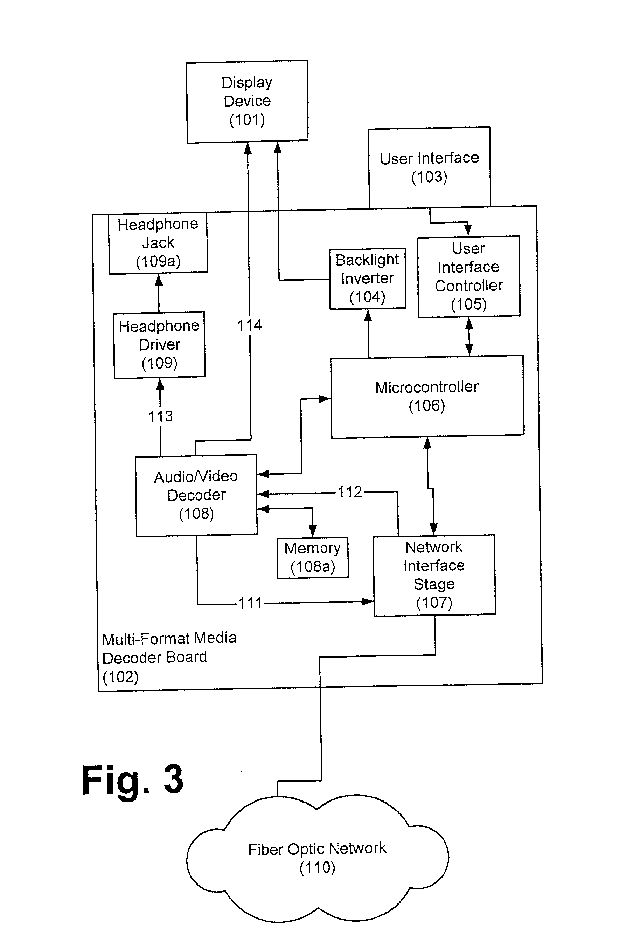

Fig. 3 is a simplified illustration of one preferred embodiment of the multi-format media decoder board (102) of the present invention. As shown in Fig. 3, the board is connected to a data network (110). As indicated before, this network (110) is preferably a fiber optic digital data network. The board (102) is connected to the network (110) through a network interface stage (107) which interfaces the optical digital signals on the network (110) with the electrical circuitry of the board (102).

The network interface stage (107) and the other electronics on the board (102) are controlled by a microcontroller or processor (106). The microcontroller (106) receives input from a user interface (103) that may include a keypad. The microcontroller (106) controls the display of overlay images on the screen in response to the user input. With this interface, the user can control the audiovisual programming being processed and output by the board (102) and can send instructions through the board (102) back to the various storage, playback and receiver devices on the network (110). In this way, for example, the user can skip tracks on a CD, change the station tuned by a tuner, fast-forward a video program, etc.

A user interface controller (105) receives and interprets input to the user interface (103) for the microcontroller (106). The function of the user interface controller (105) may be integrated in to the microcontroller (106). A backlight inverter (104) provides the high voltage required for driving the backlight of the liquid crystal display (LCD). The backlight inverter is illustrated as being on the decoder board but alternatively may be integrated with the display device (101). The user interface controller could be, for example, a touch-screen controller or keypad controller, and the user interface a touch-screen or keypad.

Under the control of the microcontroller (106), the network interface stage (107) outputs audiovisual data (112) to a multi-format audio/video decoder (108). Memory (108a) provides program space for the decoder and data space for the decoding of the audio and video streams. The connection (112) is preferably a 3-line serial interface, but may also be a parallel interface.

The decoder (108) contains decoders for at least two, preferably more, audio and audiovisual data stream formats. Consequently, the decoder (108) can decode data streams encoded using a variety of formats, including those noted herein. The decoder (108) can also return a digital audio signal (111) to the network interface stage (107) for transmission over the network (110). This may be advantageous, if speakers or other devices requiring the audio signal are connected to the network (110) and not directly to the board (102).

An analog audio signal (113) is output by the decoder (108) to, for example, a headphone driver (109) and a headphone jack (109a). A pair of headphones can be plugged into the jack (109a) and transduce the audio signal (113) into sound, Alternatively, the driver (109) and jack (109a) could be replaced by a speaker driver and speaker or speakers.

The decoder (108) also outputs a video signal (114) to a connected display device (101). The output video signal (114) may be in a variety of formats as needed to run the display device (101). For example, the signal (114) may be analog or digital, NTSC, PAL, RGB, S-video, etc.

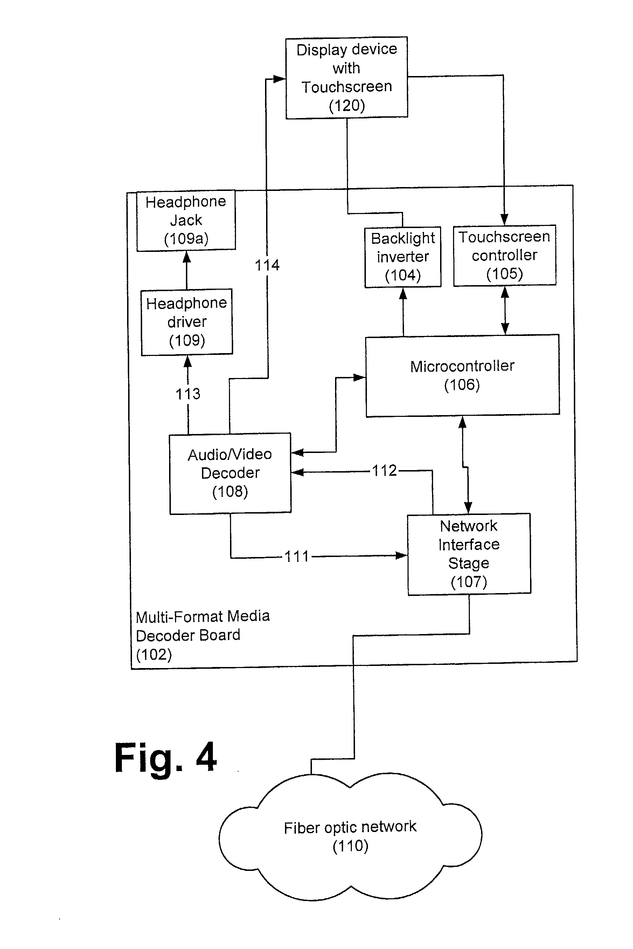

Fig. 4 illustrates another preferred embodiment of the present invention. The embodiment in Fig. 4 is substantially similar to that of Fig. 3 and a redundant explanation of identical components will be omitted.

In the embodiment of Fig. 3, the user interface (103) for controlling the decoder board (102) and the display device (101) receiving video output from the decoder board (102) were separate units. The embodiment of Fig. 4 illustrates that the user interface touch-screen (103) for controlling the decoder board (102) can be integrated with the output display device (101) that receives the video output from the decoder board (102). The integrated unit (120) is illustrated in Fig. 4.

The integrated unit (120) is preferably an LCD to accommodate the touch-screen functions of the unit (120). The integrated touch-screen outputs a signal to the touch-screen controller (105) which sends information to the microcontroller (106) to interpret the user input. The integrated unit (120) also receives the video signal (114) output by the decoder (108).

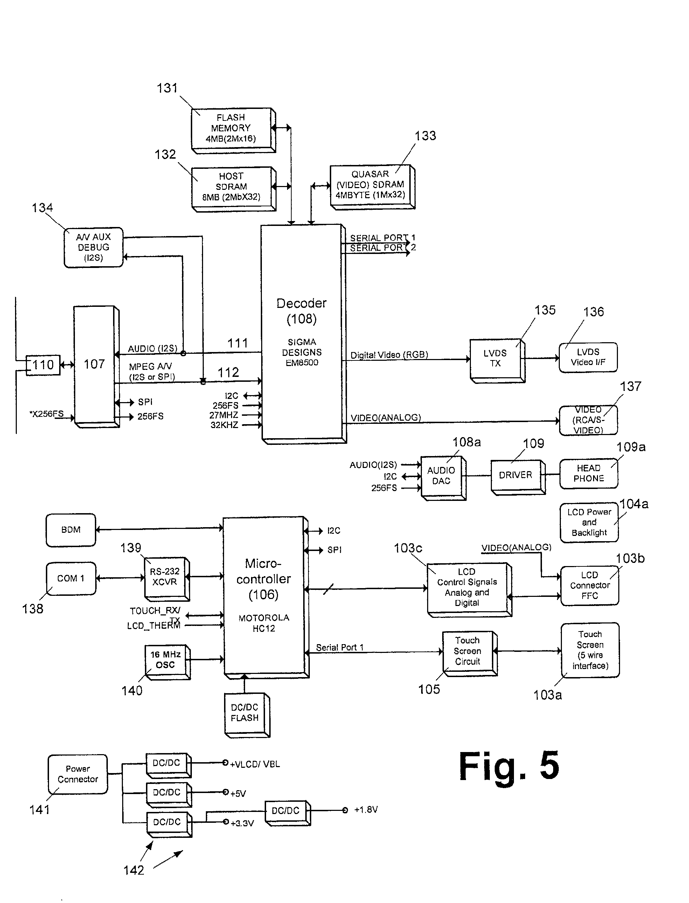

Fig. 5 is a more detailed circuit diagram of the decoder board according to one preferred embodiment of the present invention. As shown in Fig. 5, the fiber optic network (110) is connected to the network interface stage (107). The network interface stage (107) outputs an audiovisual signal (112). Several memory and buffer units (131, 132 & 133) are also connected to the decoder (108) to provide the decoder (108) with the programming and memory capacity to complete the decoding of incoming audiovisual signals of varying formats.

The decoder (108) can output a digital video signal (e.g., RGB) to a transmitter (135) that drives a digital video display device (136). The decoder (108) can also output an analog video signal to a display device (137) that uses an analog video signal, e.g., an LCD.

The decoder (108) can also output an audio signal (111). This digital signal (111) may be returned to the network interface stage (107) for output on the network (110). An auxiliary audiovisual debugging circuit (134) may also be connected to this line (111) between the decoder (108) and the interface stage (107). The debugging circuit (134) returns output to the signal line (112) from the interface (107) to the decoder (108)

The audio signal (111, I²S) is also provided to a digital-to-analog converter (108a). The digital audio signal is there converted to an analog signal and then output to the headphone driver (109) and headphone jack (109a).

The microcontroller (106) is connected to an oscillator (140) for clocking and has a communication port (138) and transceiver (139) for receiving instructions or programming from an external source. The microcontroller (106) is also connected (SPI) to the network interface stage (107) to control the interface stage (107). The microcontroller (106) is also connected (I²C) to the decoder (108) to control the decoder (108).

The microcontroller (106) is also connected to an LCD touch-screen (103a) and receives user input via the touch-screen (103a) through a touch-screen circuit (105). The microcontroller (106) can drive the display on the touch-screen through a control circuit (103c) and connector (103b). The connector (103b) can also receive and display a video signal, e.g., an analog video signal, from the decoder (108).

Finally, the decoder board pictured in Fig. 5 has a power connector (141) from which power is drawn to operate the components on the board. Various converters (142) are included to provide the components of the board with the appropriate voltages required for operation.

The preceding description has been presented only to illustrate and describe the invention. It is not intended to be exhaustive or to limit the invention to any precise form disclosed. Many modifications and variations are possible in light of the above teaching.

The preferred embodiment was chosen and described in order to best explain the principles of the invention and its practical application. The preceding description is intended to enable others skilled in the art to best utilize the invention in various embodiments and with various modifications as are suited to the particular use contemplated. It is intended that the scope of the invention be defined by the following claims.

## Claims

1. A multi-format decoder board for decoding audiovisual data streams in a plurality of encoding formats for use by one or more audiovisual output devices, said decoder board comprising:
an interface stage for interfacing with a digital data network;
a multi-format decoder for decoding at least two different encoding formats for an audiovisual data stream;
a microcontroller for controlling said interface stage and said decoder; and
connections for connecting said decoder board to one or more audiovisual output devices.

2. A multi-media system in a vehicle comprising:
a digital data network installed in a vehicle;
at least one storage, playback or receiver device on-board said vehicle for providing an encoded audiovisual data stream to said network;
at least one audiovisual output device connected to said network; and
a multi-format decoder board for decoding audiovisual data streams in a plurality of encoding forms, said decoder board decoding said audiovisual data stream for use by said at least one audiovisual output device;
wherein said decoder board comprises:
an interface stage for interfacing with a digital data network;
a multi-format decoder for decoding at least two different encoding formats for an audiovisual data stream;
a microcontroller for controlling said interface stage and said decoder; and
connections for connecting said decoder board to one or more audiovisual output devices.

3. A multi-format decoder board for decoding audiovisual data streams in a plurality of encoding formats for use by one or more audiovisual output devices, said decoder board comprising:
interface means for interfacing with a digital data network;
multi-format decoder means for decoding at least two different encoding formats for an audiovisual data stream;
controller means for controlling said interface stage and said decoder; and
output means for connecting said decoder board to one or more audiovisual output devices.

4. A decoder board or system as claimed in any one of claims 1 to 3, wherein said interface stage is an optical interface stage for interfacing said decoder board with a fibre optic network.

5. A decoder board or system as claimed in any one of the preceding claims, wherein said connections for one or more audiovisual output devices comprise a headphone jack.

6. A decoder board or system as claimed in any one of the preceding claims, wherein said connections for one or more audiovisual output devices comprise a connection for a display device.

7. A decoder board or system as claimed in any one of the preceding claims, further comprising menu images controlled by the microcontroller and displayed on the audiovisual output device, and a touch-screen connected to said decoder board, said touch-screen used to select menu items and provide user input to said microcontroller which interprets the user input.

8. A decoder board or system as claimed in claim 7, wherein the decoder outputs a decoded video signal to said audiovisual output device.

9. A decoder board or system as claimed in any one of the preceding claims, wherein said decoder outputs a decoded audio signal to said interface stage for transmission over said digital network.

10. A decoder board or system as claimed in any one of the preceding claims, wherein said decoder decodes MPEG-1, MPEG-2, MPEG-4, Motion JPEG, and VCD and provides for required content protection.

11. A decoder board or system as claimed in any one of the preceding claims, wherein said decoder decodes a data streams output by any of an audio CD player, a DVD player, a VCD player or a wireless receiver.

12. A decoder board or system as claimed in any one of the preceding claims, wherein said decoder decodes an MP3 data stream.

13. A system as claimed in claim 2, wherein said digital data network is a fibre optic network and said interface stage is an optical interface stage for interfacing said decoder board with said fibre optic network.

14. A system as claimed in claim 2 or 13, wherein said at least one audiovisual output device comprises a set of headphones and said connections for one or more audiovisual output devices comprise a headphone jack.

15. A system as claimed in claim 2 or 13, wherein said at least one audiovisual output device comprises a display device and said connections for one or more audiovisual output devices comprise a connection for said display device.

16. A system as claimed in any one of claims 2 and 13 to 15, wherein the storage, playback or receiver device is connected to the network and comprises any one or more of a hard drive, an electronic memory unit; a floppy disk drive; an analog antenna and tuner; a satellite antenna; a DVD player; an audio player; and a VCD or CD-ROM drive.

17. A decoder board or system as claimed in any one of the preceding claims, further comprising user input means connected to said board for providing user input to said controller means.

18. A method of handling a digital data stream carrying data encoded in a plurality of different encoding formats, said method comprising processing said digital data stream through a decoder board that comprises a multi-format decoder for decoding at least two different encoding formats for audiovisual data and output a resulting decoded audiovisual signal to one or more audiovisual output devices.

19. A method as claimed in claim 18, further comprising interfacing said decoder board to a digital data network with an interface stage, said digital data stream coming to said decoder board via said digital data network.

20. A method as claimed in claim 19, wherein said digital data stream is transmitted over said digital data network optically.

21. A method as claimed in any one of claims 18 to 20, further comprising outputting a decoded audio signal to a pair of headphones.

22. A method as claimed in any one of claims 18 to 21, further comprising outputting a decoded audiovisual signal to a display device.

23. A method as claimed in any one of claims 18 to 22, further comprising controlling said decoder board with a display device connected to said board, said display device displaying a user interface.

24. A method as claimed in any one of claim 18 to 23, further comprising displaying a decoded video signal from said decoder with said display device.
